# EUROPÄISCHE PATENTSCHRIFT

(11) **EP 1 158 710 B1**
(45) Veröffentlichungstag und Bekanntmachung des Hinweises auf die Patenterteilung: **05.11.2003**
(21) Anmeldenummer: 00440160.0
(22) Anmeldetag: 26.05.2000
(51) Int. Cl.: H04J 3/16

(54) **Verfahren zum Übertragen von synchronen Transportmodulen über ein synchrones Transportnetz**
Method for transmitting of synchronous transport modules over a synchronous transport network
Procédé pour la transmission de modules de transport synchrone sur un réseau de transport synchrone

(43) Veröffentlichungstag der Anmeldung: 28.11.2001
(73) Patentinhaber: ALCATEL, 75008 Paris (FR)
(72) Erfinder: Heuer, Volkmar, 71254 Ditzingen (DE)
(74) Vertreter: Urlichs, Stefan, Dipl.-Phys.

(56) Entgegenhaltungen:
- EP-A- 0 901 306
- N. JONES, M. MAYER: "A Proposal for SONET Standards on Virtual Concatenation of High Order and Low Order SPEs" CONTRIBUTION TO T1 STANDARDS PROJECT, [Online] 17. - 21. Januar 2000, Seiten 1-12, XP002150418 Gefunden im Internet: <URL:http://www.t1.org/filemgr/filesearch. taf?_function=list&_UserReference=622B9A23 45CDC7DE39EDB1D6> [gefunden am 2000-10-18]

## Beschreibung

Die Erfindung betrifft ein Verfahren zum Übertragen eines rahmenstrukturierten synchronen Multiplexsignals, das aus Transportrahmen mit einem Nutzlastbereich und einem Kopfbereich besteht, in dessen Nutzlastbereich jeweils Multiplexeinheiten gemäß einer Multiplexhierarchie verschachtelt sind, über ein synchrones Transportnetz sowie einen Multiplexer für ein synchrones Transportnetz der angepaßt ist, ein solches rahmenstrukturiertes synchrones Multiplexsignal zu übertragen.

Ein synchrones digitales Transportnetz arbeitet beispielsweise nach den Empfehlungen der ITU-T (Telecommunication Standardization Sector of International Telecommunication Union) für SDH (Synchrone Digitale Hierarchie) oder SONET (Synchronous Optical Network). Dabei werden Nutzinformationen in sogenannte Container gepackt. Die Container erhalten einen als "Path Overhead" bezeichneten Kopfbereich mit dem zusammen sie als virtuelle Container VC-N bezeichnet werden. Es gibt virtuelle Container der Typen VC-11, VC-12, VC-2, VC-3 und VC-4. Desweiteren gibt es nahtlos (contiguous) verkettete Container der Typen VC-4-4c und VC-4-16c bei SDH und VC-3-3c, VC-3-12c und VC-3-48c bei SONET. Die virtuellen Container stellen Multiplexeinheiten dar und werden in einem als Synchrones Transportmodul STM-N (N=1, 4, 16 oder 64) bezeichneten Übertragungsrahmen verschachtelt, wobei die virtuellen Container beliebig im Nutzlastbereich der Transportmodule positioniert sein können und von einem Zeiger im Kopfbereich (Overhead) der Transportmodule adressiert werden. Kleinere virtuelle Container werden dabei stets in größere virtuelle Container verschachtelt. Ein synchrones Transportmodul bei SDH besitzt beispielsweise immer einen virtuellen Container VC-4 beziehungsweise im Falle von nahtlos verketteten Containern einen VC-4-nc (n=4 oder 16). Bei SONET hingegen sind in jedem Transportmodul stets drei VC-3 enthalten, beziehungsweise im Falle von nahtlos verketteten Containern ein VC-3-3c, der einem VC-4 entspricht, ein VC-3-12c oder ein VC-3-48c. Die geschilderte Multiplexhierachie von SDH und SONET ist in ITU-T G.707 (3/96) Kapitel 6 ausführlich geschildert.

Nachrichtensignale, die in einem solchen synchronen Transportnetz übertragen werden, sind somit rahmenstrukturierte synchrone Multiplexsignale, die aus Transportrahmen mit einem Nutzlastbereich und einem Kopfbereich bestehen. In den Nutzlastbereich jedes Transportrahmens sind Multiplexeinheiten gemäß der von ITU-T festgelegten Multiplexhierarchie verschachtelt. Der Kopfbereich enthält einen Zeiger auf die größte im Nutzlastbereich enthaltene Multiplexeinheit sowie jeweils einen als RSOH (regenerator section overhead) und einen als MSOH (multiplex section overhead) bezeichneten Abschnitt. Darin sind Kontroll- und Steuerinformationen enthalten, die im Falle des RSOH von jedem Regenerator und im Falle des MSOH von jedem Multiplexer im Netz terminiert und neu erzeugt werden. Mit Hilfe dieser Kontroll- und Steuerinformationen werden unter anderem Verwaltungsfunktionen des Netzmanagementsystems ausgeführt.

Nun werden synchrone Transportnetze zunehmend nicht nur von öffentlichen Netzbetreibern eingesetzt sondern auch als Firmennetze mit firmeneigenem Netzwerkmanagement realisiert. Sollen mehrere SDH- oder SONET-basierte Teilnetze eines Firmennetzes über das Transportnetz eines öffentlichen Betreibers verbunden werden, so kann eine unterschiedliche Verwendung der Kontroll- und Steuerinformationen aus RSOH und MSOH zu Konflikten der Netzmanagementsysteme von firmeninternem und öffentlichem Transportnetz führen. Es sind Absprachen über eine einheitliche Verwendung der Kontrollund Steuerinformationen notwendig und das Netzmanagementsystem des firmeninternen Transportnetzes ist hinsichtlich der Verwaltung seines Firmennetzes beschränkt. So kann z.B. die Multiplexstruktur nicht ohne Absprache mit dem öffentlichen Netzbetreiber von 16 x VC-4 auf 1 x VC-4-16c in einem STM-16 geändert werden.

Zur Zeit werden auch optische Netze entwickelt, über die sogenannte *Optical* Channel (OCh) übertragen werden sollen. Diese Netze sollen in der Lage sein, Signale mit beliebiger Bitrate transparent zu übertragen und somit werden diese zukünftigen optischen Netze auch in der Lage sein, rahmenstrukturierte Nachrichtensignale aus einem Firmennetz transparent zu transportieren. Allerdings gibt es dafür bislang keinen verbindlichen Standard und zudem müßten für den Aufbau eines solchen optischen Netzes alle Netzelemente ausgetauscht werden.

Eine Aufgabe der Erfindung besteht darin, ein Verfahren anzugeben, mit dem es möglich ist, mit den derzeitigen SDH- oder SONET-basierten Transportnetzen synchrone digitale Teilnetze privater Betreiber zu verbinden ohne daß Absprachen zwischen den Netzwerkmanagementsystemen nötig sind und ohne daß für den privaten Betreiber Einschränkungen bestehen. Eine weitere Aufgabe der Erfindung ist es, einen Multiplexer für ein synchrones Transportnetz anzugeben, mit dem rahmenstrukturierte synchrone Multiplexsignale, die aus Transportrahmen mit einem Nutzlastbereich und einem Kopfbereich bestehen und in deren Nutzlastbereichen jeweils Multiplexeinheiten gemäß einer Multiplexhierarchie verschachtelt sind, zu übertragen, ohne daß auf den Kopfbereich der zu übertragenen Transportrahmen zugegriffen werden muß.

Die Aufgabe wird hinsichtlich des Verfahrens gelöst durch die Merkmale des Anspruchs 1 und hinsichtlich des Multiplexers durch die Merkmale des Anspruchs 9. Vorteilhafte Ausgestaltungen sind den abhängigen Ansprüchen zu entnehmen.

Ein Vorteil der Erfindung besteht darin, daß sie den Aufbau von virtuellen privaten Netzen (VPN) auf SDH- oder SONET-Basis ermöglicht. Weitere Vorteile sind, daß auch rahmenstrukturierte synchrone Nachrichtensignale übertragen werden können, bei denen Overhead Bytes proprietär, d.h. nicht entsprechend den ITU-T Empfehlungen, verwendet werden, daß RSOH, MSOH und Zeigerwerte im Kopfbereich der zu übertragenden Transportrahmen erhalten bleiben und daß somit dieselbe Wirkung bei der Übertragung solcher rahmenstrukturierter synchroner Nachrichtensignale erzielt wird, wie dies mit den geplanten optischen Netzen der Fall wäre, ohne daß dazu aber ein Austausch der existierenden Netzelemente im öffentlichen Transportnetz nötig ist.

Ein weiterer Vorteil der Erfindung besteht darin, daß der private Netzbetreiber Schutzschaltungen wie MSP (*Multiplex Section Protection, ITU-T* G.841, 10/1998, Section 7.1) oder MS-SPRING *(Multiplex Section Shared Protection Ring*, ITU-T G.841, 10/1998, Section 7.2) zwischen seinen Teilnetzen einrichten kann.

Die Erfindung läßt sich auch beim Verschalten von rahmenstrukturierten Nachrichtensignalen innerhalb eines Netzelementes vorteilhaft einsetzen.

Im folgenden wird die Erfindung in mehreren Ausführungsbeispielen anhand der Figuren 1 bis 8 beschrieben. Es zeigt:
- Figur 1:: Teilnetze eines privaten Netzbetreibers, der seine Teilnetze über ein öffentliches Transportnetz verbindet,
- Figur 2:: die Multiplexstruktur für das erfindungsgemäße Verfahren für ein SDH-basiertes Transportnetz,
- Figur 3:: die Multiplexstruktur für das erfindungsgemäße Verfahren für ein SONET-basiertes Transportnetz,
- Figur 4a, b:: ein erstes Beispiel für das Mapping von Transportrahmens von Typ STM-4 in einem SDH-basierten Transportnetz,
- Figur 5a, b:: ein zweites Beispiel für das Mapping von Transportrahmen vom Typ STM-16,
- Figur 6:: den Aufbau eines virtuellen privaten Netzes mit der Anordnung aus Figur 1,
- Figur 7:: der logische Aufbau des virtuellen privaten Netzes aus Figur 6 und
- Figur 8:: ein Blockdiagramm eines erfindungsgemäßen Multiplexers.

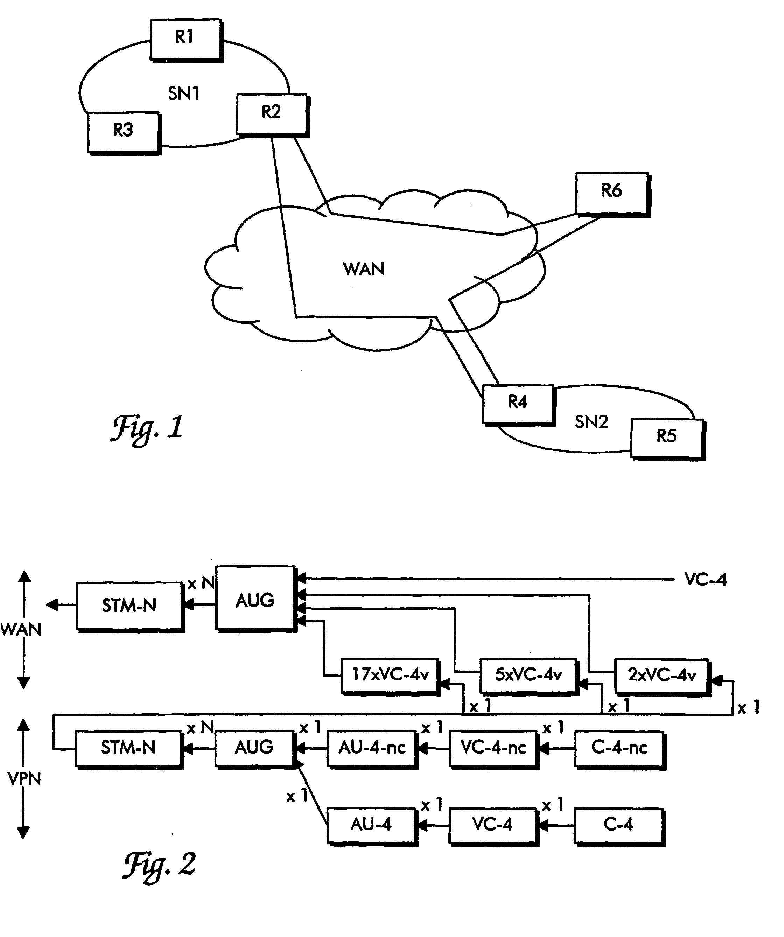

Figur 1 zeigt als erstes Ausführungsbeispiel eine Anwendung der Erfindung. Zwei Teilnetze SN1 und SN2 sowie ein einzelnes Netzelement R6 eines privaten Betreibers sind über ein öffentliches Transportnetz WAN miteinander verbunden. Das erste Teilnetz SN1 enthält drei Netzelemente R1, R2 und R3, die zu einem Ringnetz verbunden sind. Das zweite Teilnetz SN2 enthält zwei Netzelemente R4 und R5, die über zwei redundante Leitungen miteinander verbunden sind. Die Netzelemente sind innerhalb der Teilnetze SN1, SN2 über SDH-Schnittstellen miteinander verbunden, über die rahmenstrukturierte synchrone Multiplexsignale übertragen werden. Die Multiplexsignale bestehen aus synchronen Transportmodulen vom Typ STM-4.

Jedes der Netzelemente R1-R6 ist ein IP-Router jeweils eines Datennetzes, über das eine Vielzahl IP-fähiger Endgeräte des Betreibers miteinander vernetzt sind. Die SDH-Verbindungen innerhalb der Teilnetze stellen das Backbone-Netz des Betreibers dar, über das der IP-Verkehr zwischen den Datennetzen z.B. mittels des aus IETF RFC 1619 und 1661 bekannten Verfahrens für "IP über SDH" abgewickelt wird.

Die Teilnetze SN1, SN2 und der einzelne Router R6 sollen nun über das Transportnetz WAN ebenfalls Transportmodule vom Typ STM-4 austauschen können, damit die Teilnetze untereinander verbunden sind. Dazu ist es notwendig, die Transportmodule zwischen den Teilnetzen unverändert zu übertragen, d.h. ohne im Transportnetz WAN den Overhead der Transportmodule zu terminieren, damit für das Backbone-Netz des Betreibers keine Einschränkungen hinsichtlich der Verwendung der Overhead-Bytes entstehen.

Ein Grundgedanke der Erfindung besteht nun darin, die synchronen Transportmodule transparent als Nutzlast in einer Verkettung virtueller Container zu übertragen. Dazu werden in dem Transportnetz neue Multiplexeinheiten vom Typ VC-4 gebildet und miteinander zu einer virtuellen Verkettung VC-4-nv verkettet. In die Nutzlastbereiche der Multiplexeinheiten dieser virtuellen Verkettung werden die zwischen den Teilnetzen zu übertragende Transportrahmen als Nutzlast verpackt. Die neu gebildeten Multiplexeinheiten werden dann in den Nutzlastbereich von neu gebildeten Transportmodulen eingebettet und über das Transportnetz WAN übertragen.

Dazu wird das in Figur 2 dargestellte Mapping verwendet. Es zeigt einen Container C-4, der durch Hinzufügen eines als POH (Path Overhead) bezeichneten Kopfbereiches zu einem virtuellen Container VC-4 erweitert wird. Der Container C-4 enthält zu übertragende Daten eines Nutzlastsignals. Der virtuelle Container VC-4 stellt die Multiplexeinheit dar. Durch Hinzufügen eines Zeigers, der die Phasenlage des virtuellen Containers VC-4 in einem übergeordneten Transportrahmen angibt, wird aus dem VC-4 eine sogenannte AUG (Administrative Unit Group).

Alternativ kann, wie im zweituntersten Zwei der Figur gezeigt, eine AUG auch einen Container einer nahtlosen Verkettung (contiguous concatenation) C-4-nc enthalten. Solche nahtlosen Verkettungen werden eingesetzt, wenn in einem Transportmodul STM-N (N=4, 16 oder 64), das größer als ein STM-1 ist, die Nutzlastbereiche der darin enthaltenen Container C-4 gemeinsam für einen einzigen Übertragungskanal genutzt werden sollen. Es ist an dieser Stelle noch anzumerken, daß in der Nomenklatur der in ITU-T SG15 derzeit diskutierten Draft-Fassung von ITU-T G.707 (Temporary Document 48R1(PLEN), 4/00) eine Unterscheidung der AUG in AUGN (N=1, 4, 16) getroffen wird entsprechend der Größe des Transportmoduls, in dem die AUG transportiert wird. Ein STM-16 enthält danach stets eine AUG16. Diese AUG16 kann entweder eine nahtlose Verkettung von 16 VC-4 (VC-4-16c) enthalten oder aber vier byteweise verschachtelte AUG4. Die AUG4 können wiederum entweder eine nahtlose Verkettung VC-4-4c oder aber vier byteweise verschachtelte AUG1 enthalten.

In einem nächsten Schritt wird ein Transportrahmen STM-N gebildet, wobei N=1, 4, 16 oder 64 sein kann. Für N=1 enthält der Transportrahmen wie bereits erwähnt einen Kopfbereich mit MSOH, RSOH und Zeiger, sowie einen Nutzdatenbereich. Der Nutzdatenbereich faßt genau eine AUG1 und der Zeiger addressiert den Beginn des VC-4 im Nutzdatenbereich. Höhere Transportrahmen (N=4, 16, 64) werden durch byteweises Verschachteln von N AUG1 zu AUGN gebildet. Ein STM-N enthält somit genau eine AUGN, die wiederum entsprechend der geschilderten Multiplexvorschrift genau N AUG1 enthält. In Draft-Fassung von ITU-T G.707 (Temporary Document 48R1(PLEN), 4/00) Kapitel 7.1 ist detailliert beschrieben wie die AUG in den STM-N verschachtelt werden.

Der so entstandene Transportrahmen STM-N wird nun periodisch mit einem Rahmentakt wiederholt, wobei natürlich jeder neuen Rahmen neue Datenbits des zu übertragenden Nutzlastsignals enthält. Der aus den periodisch wiederholten Transportrahmen entstehende synchrone Datenstrom wird in den Teilnetzen des privaten Betreibers übertragen und transportiert alle Nutzdaten, d.h. im Ausführungsbeispiel die IP Pakete, die in dem Backbone-Netz des Betreibers zwischen den einzelnen Routern übertragen werden. Dieser Datenstrom soll nun als ganzes auch über das öffentliche Transportnetz WAN übertragen werden, um die Teilnetze SN1, SN2 sowie den einzelnen Router R6 zu einem Gesamtnetz zu verbinden.

Dazu werden von dem Multiplexer an der Schnittstelle zwischen öffentlichem Transportnetz und privatem Firmennetz neue Multiplexeinheiten VC-4 erzeugt und zu einer virtuellen Verkettung VC-4v verkettet. Eine solche virtuelle Verkettung von virtuellen Containern VC-4 ist an sich bekannt und in ITU-T G.707 Kapitel 8.1.7 beschrieben. Die Anzahl der Multiplexeinheiten in der Verkettung ist von der Größe des zu übertragenden Transportmoduls abhängig. Soll wie im Ausführungsbeispiel ein STM-4 übertragen werden, so benötigt der öffentliche Netzbetreiber 5 Multiplexeinheiten vom Typ VC-4. Für STM-1 würden zwei VC-4 benötigt, für STM-16 17 VC-4 und für STM-64 68 VC-4. Dies ist in dem Mapping in Figur 2 schematisch durch parallele Wege im Ablauf angedeutet.

Die virtuellen Container VC-4 der Verkettung werden nun entsprechend der vorstehend beschriebenen Multiplexvorschrift zu einer neuen AUG zusammengefaßt. Bekanntlich kann ein STM-N genau N VC-4 aufnehmen. Da die Anzahl der verketteten Container (2, 5, 17 oder 68) nicht den zulässigen Werten für N (1, 4, 16, 64) entspricht, muß der nächstgrößere Transportrahmen verwendet werden. Die übrige Kapazität des Transportrahmens kann mit weiteren Multiplexeinheiten VC-4 gefüllt werden. Dies ist in Figur 2 durch einen weiteren Zufluß für die obere AUG dargestellt.

Da es sich um eine virtuelle Verkettung handelt, können alternativ zu einem nächstgrößeren Transportrahmen auch mehrere kleinere Transportrahmen verwendet werden. Die einzelnen Multiplexeinheiten der virtuellen Verkettung müssen nämlich nicht notwendig über dasselbe Interface übertragen werden, sondern dürfen auch unterschiedliche Wege durch das Übertragungsnetz nehmen, wobei Laufzeitunterschiede im empfangenden Netzelement durch Zwischenspeicherung ausgeglichen werden. Es ist jedoch vorteilhaft, die virtuelle Verkettung in einem einzigen Transportmodul zu übertragen, da hierdurch die Laufzeitunterschiede minimiert werden.

Nun wird ein neuer Transportrahmen STM-N gebildet und die AUG wird in den Nutzlastbereich dieses neuen Transportrahmen eingebettet. Durch periodisches Wiederholen dieses Transportrahmens mit stets neuer Nutzlast entsteht ein neuer synchroner Datenstrom, der über das Transportnetz WAN des öffentlichen Betreibers übertragen wird. Bei der Übertragung steht der Overhead der neu gebildeten Transportrahmen ausschließlich für Steuerungs- und Verwaltungsaufgaben des öffentlichen Transportnetzes zur Verfügung. Der öffentliche Betreiber kann entsprechend den ITU-T Empfehlungen ohne weitere Einschränkungen auf die Overheadbytes zugreifen, ohne des ein Konflikt mit den Netzwerkmanagementsystem des privaten Betreibers entstehen kann, da die von seinen Netzelementen gebildeten Transportrahmen mitsamt Overhead als Nutzlast durch das öffentliche Transportnetz geschleust werden.

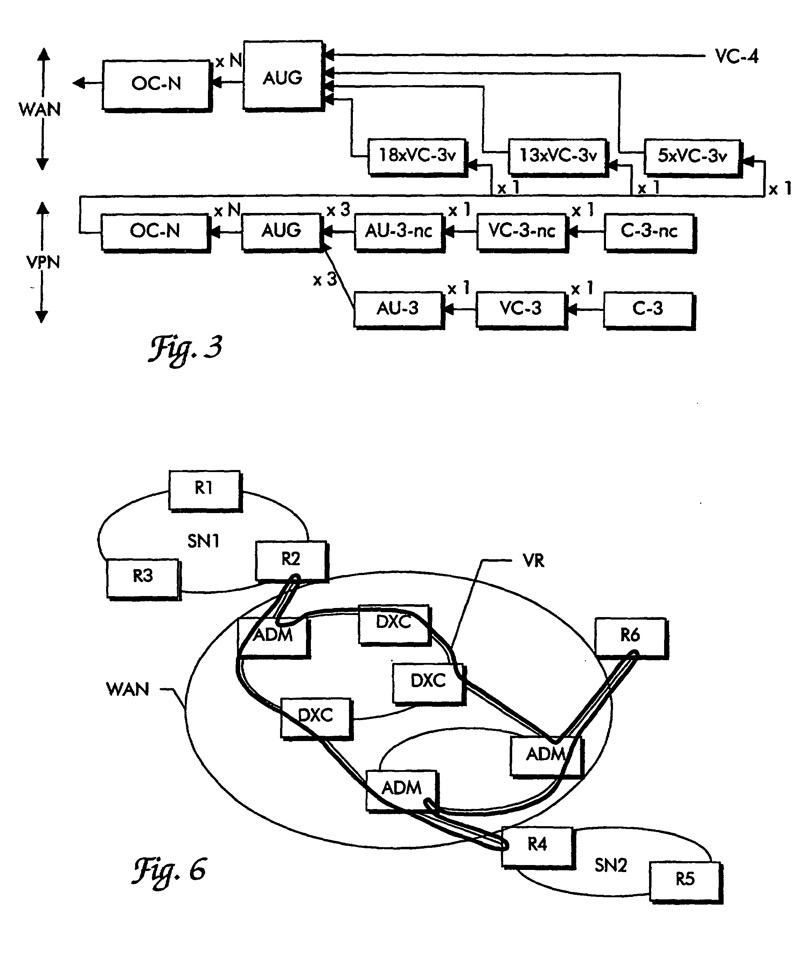

In Figur 3 ist das entsprechende Mapping für ein SONET-basiertes Transportnetz dargestellt. Anstelle eines VC-4 werden in SONET stets drei VC-3 verwendet und zu einer AUG zusammengefaßt. Die Transportmodule heißen bei SONET nicht STM-N sondern OC-N (optisch) oder STS-N (elektrisch) mit N=3, 12, 48 oder 192. Sie enthalten analog zu einem STM-N ebenfalls einen RSOH und einen MSOH im Kopfabschnitt. Allerdings kommt nicht nur ein Zeiger hinzu, sondern entsprechend der Anzahl Multiplexeinheiten der höchsten Hierarchiestufe (VC-3) drei Zeiger auf die drei VC-3 der AUG. Die Anzahl der zum Transport virtuell zu verkettenden virtuellen Container VC-3-Xv für die Transportmodule OC-3, OC-12, und OC-48 ist der Figur zu entnehmen.

Neben den in Figur 2 und 3 dargestellten Mappings sind auch Mischformen möglich, bei denen z.B. der private Betreiber ein SONET-basiertes Netz betreibt und seine Teilnetze über ein SDH-basiertes Transportnetz des öffentlichen Anbieters verbindet.

Figur 4 a und b zeigen schematisch, wie die zu transportierenden Transportrahmen aus dem privaten Netz im ersten Ausführungsbeispiel in die neu zu bildenden verketteten Multiplexeinheiten des öffentlichen Betreibers eingebettet werden. Figur 4a zeigt zunächst den Aufbau des STM-4 des privaten Betreibers. Der Aufbau entspricht der Festlegung gemäß ITU-T G.707. Der STM-4 besitzt einen einzigen Kopfbereich mit der Länge von N*9 Spalten und einen einzigen Nutzlastbereich, der eine AUG4 enthält, die durch byteweises verschachteln von vier AUG1 hervorgegangen ist. In Figur 4a ist jedoch zur besseren Verständlichkeit eine abweichende Bezeichnung gewählt worden. Es ist anzumerken, daß hierbei lediglich eine andere Bezeichnung gewählt wurde, der tatsächliche Aufbau im Ausführungsbeispiel jedoch den Vorschriften von ITU-T G.707 entspricht.

Der STM-4 ist wie in Figur 4a dargestellt aus vier byteweise verschachtelten Rahmen vom Typ STM-1**. Die Bezeichnung STM-1** wurde gewählt, um deutlich zu machen, daß es sich nicht um STM-1 Rahmen handelt, die STM-1**-Rahmen jedoch in Aufbau und Aussehen formal einem STM-1-Rahmen entsprechen. Der Übersichtlichkeit halber sind die vier STM-1** nicht verschachtelt sondern hintereinander dargestellt.

Jeder der vier STM-1** besteht einer AUG1 und aus einem Teil des Kopfbereichs der STM-4. Der STM-4 enthält wie bereits festgestellt nur einen einzigen Kopfbereich aus 4*9 Spalten. Dieser ist in Figur 4a jedoch in vier gleiche Teilte aufgeteilt dargestellt, wobei jeweils ein Viertel des Kopfbereiches einem STM-1** als Kopf dieses fiktiven Rahmens zugeordnet ist. Da die vier STM-1** byteweise verschachtelt sind, bilden die vier Teile gerade den tatsächlichen Kopfbereich des STM-4.

Der Kopfbereich besteht aus RS-OH, MS-OH und AU-Zeiger AU-PTR. Entsprechend wurde auch in Figur 4a die Bezeichnung für jedes der Kopfteile der vier STM-1** gewählt. Daran schließt sich der Nutzlastbereich an, der entsprechend der fiktiven Aufteilung in vier STM-1** ebenfalls in vier Teile aufgeteilt dargestellt ist, wobei jeweils ein Teil des Nutzlastbereichs einem STM-1** zugeordnet ist. In jedem der Teile des Nutzlastbereichs ist ein virtueller Container VC-4 enthalten, der aus einem Container C4 und einem Containerkopf POH besteht. Der Übersicht halber und ohne Einschränkung der Allgemeinheit sind die im Nutzlastbereich enthaltenen Container in der Figur jeweils direkt an den Kopfbereich des Transportrahmens angrenzend gezeichnet, d.h. die AU-Zeiger wären im Ausführungsbeispiel alle Null. Tatsächlich kann der VC-4 im Nutzlastbereich eines STM-1** beliebig positioniert sein und sich bis in den Nutzlastbereich des folgenden Rahmens erstrecken. Dies ist eine grundlegende Eigenschaft von synchronen Transportnetzen (SDH, SONET): Durch AU-Zeigeranpassung (engl: pointer justification) und entsprechende Verschiebung des virtuellen Containers werden Taktunterschiede zwischen einzelnen Netzelementen des Transportnetzes ausgeglichen.

Ein STM-1** hat 9 Zeilen und 270 Spalten. Die Spalten 1-9 belegt das ihm zugeordnet Viertel des Kopfbereichs, die übrigen Spalten 10-270 stellen den ihm zugeordneten Teil des Nutzlastbereichs dar.

In Figur 4b sind die fünf virtuellen Container VC-4v der virtuellen Verkettung VC-4-5v dargestellt. Der obere Teil der Figur zeigt detailliert den ersten virtuellen Container VC-4v#1, während die übrigen vier virtuellen Container verkürzt dargestellt sind. Tatsächlich haben jedoch alle fünf virtuellen Container dieselbe Länge.

Jedem der virtuellen Container ist ein AU-Zeiger AU-PTR-v1, ..., AU-PTR-v5 zugeordnet, der dessen Phasenlage im übergeordneten Transportmodul angibt. VC-4 und AU-Zeiger stellen eine AUG1 dar. Da es sich um eine virtuelle Verkettung handelt, werden alle fünf AU-Zeiger unabhängig voneinander bestimmt, da die fünf VC-4 mit beliebiger Phasenlage zueinander transportiert werden dürfen. Am oberen Rand der VC-4 sind die Spaltennummern von 1 bis 261 und am rechten Rand die Zeilennummern von 1 bis 9 der AUG angegeben.

Der erste VC-4 beginnt in Spalte 1 mit dem POH (path overhead). Daran schließt sich der Nutzlastbereich des VC-4 an. Darin sind die Kopfbereiche des zu transportierenden STM-4 eingepackt. Spalten 2 bis 10 enthalten den Kopfbereich des ersten STM-1** aus dem STM-4, Spalten 11 bis 19 den Kopfbereich des zweiten STM-1**, Spalten 20-28 den Kopfbereich des dritten und Spalten 29 bis 37 den Kopfbereich des vierten. Daran schließen sich in den Spalten 38 bis 41 die Containerköpfe POH der vier in den vier STM-1** enthaltenen Multiplexeinheiten an. Die übrigen Spalten 42 bis 261 sind für proprietäre oder zukünftige Verwendung durch die Netzwerkmanagementsysteme von öffentlichem und privatem Netzbetreiber reserviert und werden sofern sie nicht benutzt sind, mit hexFF aufgefüllt. Beispielhaft ist gezeigt, daß Spalten 42 bis 50 für den öffentlichen Betreiber reserviert sind und Spalten 51 bis 269 für den privaten Betreiber.

Der zweite VC-4 der Verkettung enthält ebenfalls einen Containerkopf POH#v2. Angrenzend an den Containerkopf wird als Nutzlast der erste Container C4 aus dem zu übertragenden STM-4 Rahmen angefügt. Entsprechend enthält der dritte VC-4 der Verkettung den zweiten Container C4 aus dem STM-4 Rahmen, der vierte VC-4 enthält den dritten Container C4 und der fünfte VC-4 schließlich enthält den vierten Container C4. Somit ist der gesamte Nutzlastinhalt des zu übertragenden STM-4 Rahmens auf die virtuellen Container zwei bis fünf der Verkettung verteilt, während alle Steuerinformationen aus den Kopfbereichen in den ersten VC-4 eingebettet sind.

Das entsprechende Mapping für einen aus dem privaten Netz zu übertragenden Transportrahmen vom Typ STM-16 ist in den Figuren 5a und 5b angegeben. Der zu übertragende STM-16 besteht aus 16 byteweise verschachtelten STM-1**, die jeweils einen Teil des Rahmenkopfs aus RS-OH, MS-OH und AU-Zeiger enthalten. Daran schließt sich wiederum jeweils ein virtueller Container vom Typ VC-4 an, der aus einem Containerkopf POH und einem Nutzlastbereich C4 besteht. In Figur 5a sind beispielhaft nur die ersten beiden STM-1** Rahmen und der letzte, d.h. der sechzehnte, STM-1** Rahmen dargestellt.

Figur 5b zeigt, wie dieser STM-16 Rahmen in eine virtuelle Verkettung aus siebzehn VC-4 eingepackt wird. Dabei zeigt Figur 5b beispielhaft nur die ersten drei VC-4 sowie den letzten, d.h. den siebzehnten, VC-4 der Verkettung. Der erste VC-4 enthält wie im vorherigen Beispiel die Rahmenköpfe der sechzehn STM-1** Rahmen aus dem zu übertragenden STM-16 sowie die Containerköpfe POH der VC-4 aus dem STM-16. Wie im vorherigen Beispiel sind am oberen Rand die Spaltennummern der AUG angegeben und am rechten Rand die Zeilennummern. Der AU-Zeiger besteht aus neun Bytes. In der ersten Spalte der AUG beginnt der VC-4 mit seinem POH. Spalten 2 bis 10 enthalten den Kopfbereich des ersten STM-1** aus dem zu übertragenden STM-16. Spalten 11 bis 19 enthalten den Kopfbereich des zweiten STM-1** usw.. Spalten 137 bis 145 schließlich (137=2+15*9) enthalten den Kopfbereich des sechzehnten zu übertragenden STM-1**-Rahmens. Daran schließen sich in Spalten 146 bis 161 die Containerköpfe POH aus dem zu übertragenden STM-1** an. Zeilen 162 bis 261 sind für proprietäre oder zukünftige Verwendung durch die Netzwerkmanagementsysteme von öffentlichem und privatem Netzbetreiber reserviert und werden sofern sie nicht benutzt sind, mit hexFF aufgefüllt.

Beispielhaft ist gezeigt, daß Spalten 162 bis 170 für den öffentlichen Betreiber reserviert sind und Spalten 171 bis 261 für den privaten Betreiber.

In Figur 6 ist schematisch dargestellt, wie die Übertragung der Transportrahmen zwischen den Teilnetzen des privaten Betreibers über das öffentliche Transportnetz verläuft. Es wird dabei dieselbe Anordnung zugrunde gelegt, wie in Figur 1. Das öffentliche Transportnetz WAN ist jedoch detailliert dargestellt. Es besteht aus zwei Ringnetzen, die an jeweils zwei Stellen miteinander verbunden sind. Die Ringnetze bestehen aus Netzelementen ADM, DXC, die untereinander bidirektional verbunden sind. Solche Netzelemente sind Add/Drop-Multiplexer ADM oder digitale Crossconnects DXC. Jedes der Netzelemente R2, R4 und R6 des Betreibers, die die privaten Teilnetze SN1, SN2 über das öffentliche Transportnetz WAN miteinander verbinden, sind jeweils an einen Add/Drop-Multiplexer des öffentlichen Transportnetzes angeschlossen. Von diesen Add/Drop-Multiplexers, werden die zwischen den Teilnetzen SN1, SN2 und R6 zu übertragenden Transportrahmen nach dem bereits ausführlich erläuterten Verfahren in eine Verkettung von virtuellen Containern verpackt und in neu gebildeten Transportrahmen übertragen. Zwischen den Netzelementen R2, R4 und R6 entsteht dadurch ein virtuelles Ringnetz VR, über das zu STM-4 Transportrahmen strukturierte Multiplexsignale übertragen werden.

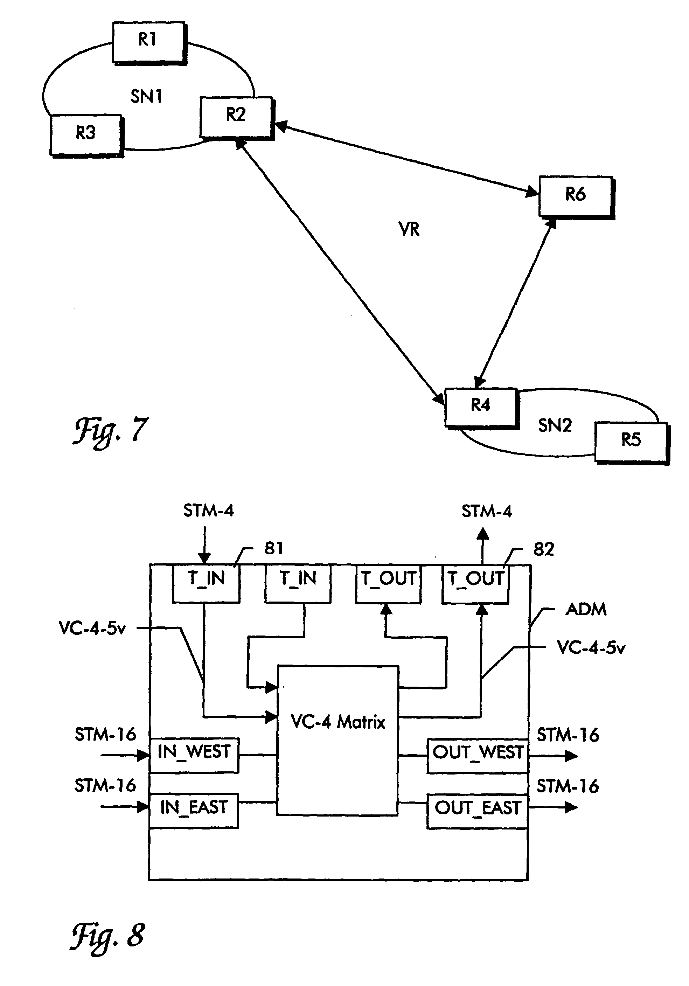

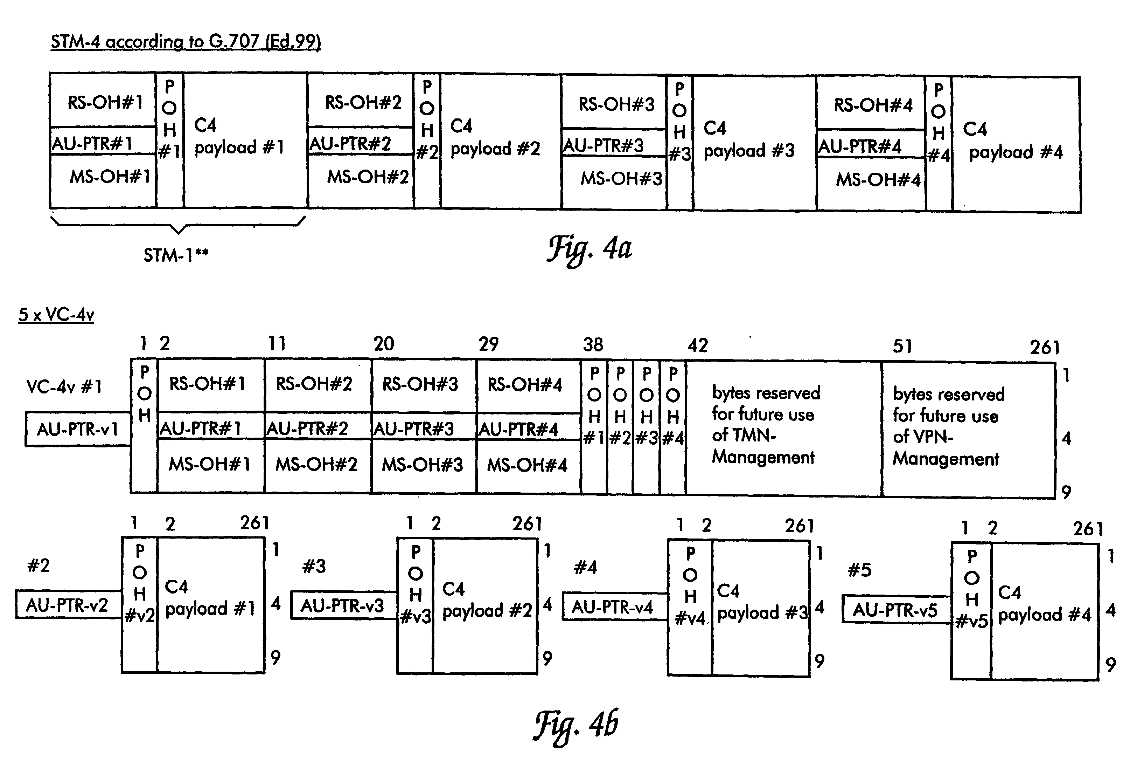

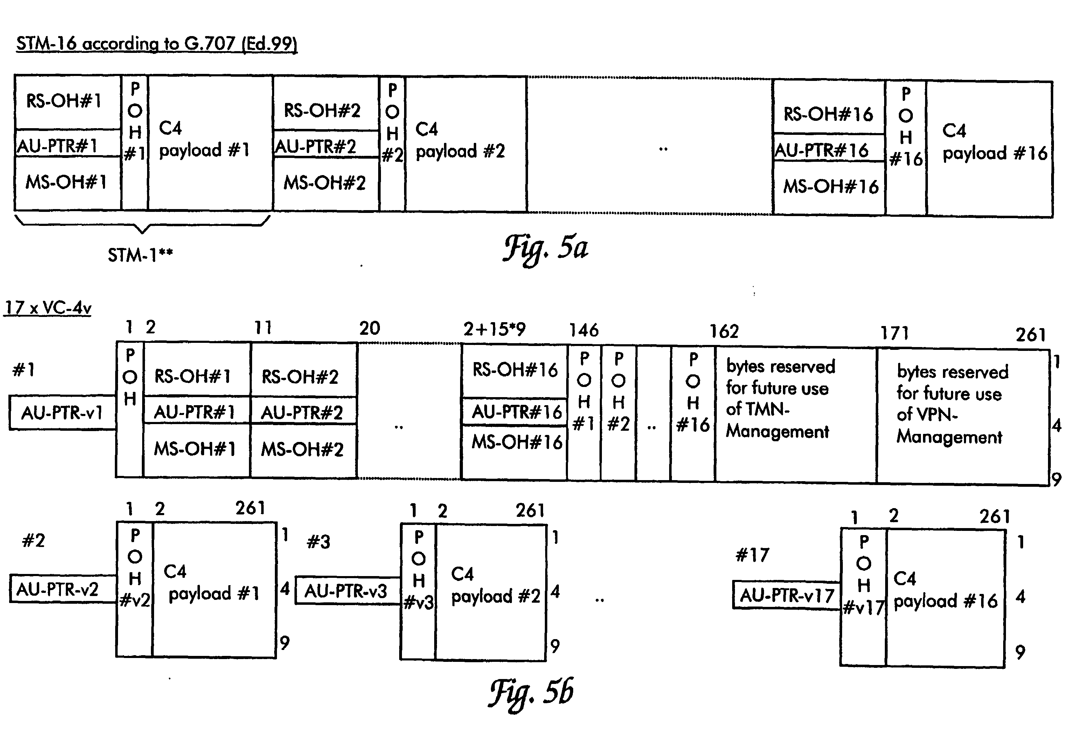

In Figur 7 ist das virtuelle Ringnetz VR zur besseren Übersicht schematisch herausgezeichnet. Da die STM-4 Rahmen zwischen den Netzelementen R2, R4 und R6 über das öffentliche Transportnetz transparent übertragen werden, indem sie als Nutzlast behandelt und in eine Verkettung virtueller Container verpackt werden, besteht für den privaten Netzbetreiber kein Unterschied zu einer direkten Verbindung seiner Netzelemente. Die Netzelemente R2, R4 und R6 sind daher aus seiner Sicht zu einem Ringnetz miteinander bidirektional verbunden. Somit besteht in diesem virtuellen Ringnetz auch die Möglichkeit, im Fehlerfall, d.h. wenn die Verbindung zwischen zwei der drei Netzelemente ausfällt, auf die Gegenrichtung im Ring umzuschalten und somit die Verbindung trotz des Ausfalls wieder herzustellen. Eine solche Schutzschaltung wird als MS-SPRING bezeichnet. Es können auch proprietäre Ringe und lineare MS-Schutzschaltungen eingerichtet werden.

In Figur 8 ist ein Multiplexer ADM dargestellt, mit dem das erfindungsgemäße Übertragungsverfahren durchgeführt werden kann. Es handelt sich um einen Add/DropAdd/Drop-Multiplexer, wie er z.B. in dem öffentlichen Transportnetz WAN in Figur 6 eingesetzt wird. Der Multiplexer weist jeweils einen Ost- und einen West-Eingang IN_EAST, IN_WEST und einen Ost- und einen West-Ausgang OUT_EAST, OUT_WEST auf, die an vier Lichtwellenleiter angeschlossen werden, die als Ost- und Westleitungen eines bidirektionalen SDH-Ringnetzes dienen. An den Eingängen werden STM-16 Rahmen empfangen und an den Ausgängen STM-16 Rahmen gesendet. In den Eingängen werden die empfangenen Transportrahmen terminiert, d.h. deren Rahmenköpfe werden ausgewertet und die in den Rahmen enthaltenen virtuellen Container vom Typ VC-4 werden an eine zentrale Schaltmatrix (VC-4 Matrix) weitergeleitet. In den Ausgängen werden neue Transportrahmen STM-16 gebildet und die von der Schaltmatrix empfangenen virtuellen Container werden darin eingepackt. Der Multiplexer verfügt zudem über eine Anzahl Zufluß-Eingänge T_IN (engl: tributary) und -Ausgänge T_OUT, über die Nutzdaten als virtuelle Container in das Ringnetz eingefügt (Add) oder aus dem Ringnetz ausgekoppelt und einem angeschlossenen Nutzer zugeleitet werden können (Drop).

Die Schaltmatrix dient dazu, die virtuellen Container, die in dem Multiplexer ADM nicht terminiert werden sollen, vom West-Eingang zum Ost-Ausgang und vom Ost-Eingang zum West-Ausgang zu schalten. Virtuelle Container, die von dem Multiplexer ADM terminiert werden sollen (Drop), werden vom betreffenden Eingang über die VC-4-Matrix an einen der Zufluß-Ausgänge geschaltet. Nutzdaten, die von einem der Zufluß-Eingänge in den Ring eingefügt werden sollen (Add), werden im betreffenden Zufluß-Eingang in einen neu gebildeten virtuellen Container VC-4 gepackt und über die VC-4-Matrix einem der Ausgänge zugeschaltet.

An dem Zufluß-Eingang 81 wird ein zu STM-4 Rahmen strukturierter Datenstrom empfangen. In dem Eingang 81 werden entsprechend des anhand von Figur 4a und b beschriebenen Mapping für jeden empfangenen STM-4 Rahmen fünf virtuellen Container VC-4 gebildet und miteinander virtuell verkettet. In diese fünf VC-4 wird ein jeweils STM-4 Rahmen eingepackt. Die verketteten fünf VC-4-5v werden dann der VC-4-Matrix zugeleitet und von der Matrix einem entsprechenden Ausgang, z.B. den West-Ausgang OUT_WEST zugeleitet, wo sie mit anderen VC-4s in den STM-16 Rahmen verschachtelt werden.

Die Gegenrichtung ist beispielhaft am Zufluß-Ausgang 82 dargestellt. Die VC-4-Matrix schaltet eine Verkettung VC-4-5v von fünf VC-4, die z.B. in dem am West-Eingang IN_WEST empfangenen STM-16 Rahmen enthalten sind, zu dem Ausgang 82. Dort wird die Nutzinformation der fünf VC-4 aus deren Nutzlastbereichen ausgelesen, in einem Pufferspeicher zwischengespeichert und in ursprünglicher Phasenlage zu einem STM-4 Rahmen zusammengesetzt, der dann am Ausgang 82 gesendet wird. Um den STM-4 Rahmen zusammenzusetzen, werden aus dem ersten VC-4 die gemäß dem in Figur 4b gezeigten Mapping verpackten Rahmenköpfe ausgelesen und als Rahmenköpfe für neu zu bildende STM-1 Rahmen verwendet. Dann werden die Containerköpfe POH ausgelesen und an die im Nutzlastbereich der folgenden vier VC-4 enthaltenen Container C4 angefügt. Anschließend werden die so neu gebildeten VC-4 entsprechend dem Wert des im Rahmenkopf befindlichen AU-Zeigers in die STM-1 Rahmen eingefügt und die STM-1 Rahmen byteweise zu einem STM-4 Rahmen verschachtelt. Der Multiplexer ADM arbeitet somit gleichzeitig, als Multiplexer und als Demultiplexer.

In den Ausführungsbeispielen wurde durchweg die virtuelle Verkettung von VC-4 verwendet, um STM-N Rahmen zu transportieren. Die virtuelle Verkettung bringt bei der Übertragung Vorteile, da in zwischengeschalteten Netzelementen nicht auf die Phasenlage der einzelnen verketteten VC-4 geachtet werden muß und somit keine Maßnahmen ergriffen werden brauchen, um differentielle Phasenschwankungen zwischen den VC-4 zu unterdrücken. Dennoch kann für die erfindungsgemäße Übertragung von STM-N Rahmen auch eine nahtlose Verkettung (contiguous concatenation) von VC-4 eingesetzt werden. In SONET-basierten Transportnetzen wird anstelle der Verkettung von VC-4s eine Verkettung von VC-3 verwendet, da der VC-4 wie bereits erwähnt bei nur als VC-3-3c SONET nicht.

Die Erfindung kann bei Netzelementen auch vorteilhaft geräteintern eingesetzt werden, um ganze Transportrahmen durch eine Schaltmatrix zu schalten, die nur für virtuelle Container ausgelegt ist. Dabei wird ein empfangener Transportrahmen eingangsseitig in eine Verkettung virtueller Container eingebettet und die virtuellen Container der Verkettung werden dann durch die Schaltmatrix zu einem Ausgang geschaltet, wo sie wieder entfernt werden und der ursprüngliche Transportrahmen wieder zusammengesetzt wird. Dies ermöglicht es, durch eine Matrix, die an sich nur virtuelle Container schalten kann, auch ganze Transportrahmen zu schalten. Dadurch muß der Rahmenkopf der Transportrahmen eingangsseitig nicht terminiert und ausgangsseitig neu erzeugt werden.

Das erfindungsgemäße Verfahren kann zumindest theoretisch beliebig oft iterativ verschachtelt werden, d.h. ein erstes rahmenstrukturiertes synchrones Multiplexsignal kann als Nutzlast einer ersten virtuellen Verkettung in einem zweiten rahmenstrukturierten synchronen Multiplexsignal übertragen werden, daß wiederum als Nutzlast einer zweiten virtuellen Verkettung in einem dritten rahmenstrukturierten synchronen Multiplexsignal transportiert wird, u.s.w..

## Patentansprüche

1. Verfahren zum Übertragen eines rahmenstrukturierten synchronen Multiplexsignals, das aus Transportrahmen (STM-4) mit einem Nutzlastbereich und einem Kopfbereich (MS-OH, RS-OH, AU-PTR) besteht, in dessen Nutzlastbereich jeweils Multiplexeinheiten (VC-4) gemäß einer Multiplexhierarchie verschachtelt sind, über ein synchrones digitales Transportnetz (WAN),
**dadurch gekennzeichnet, daß**
die zu übertragenden Transportrahmen (STM-4) einschließlich deren unveränderter Kopfbereiche (MS-OH, RS-OH, AU-PTR) als Nutzlast in einer Verkettung (VC-4-5v) von neu gebildeten Multiplexeinheiten (VC-4v) übertragen werden.

2. Verfahren nach Anspruch 1 mit folgenden Schritten:
- Bilden von einer Anzahl neuer Multiplexeinheiten (VC-4v) gleicher Größe und Verketten dieser neuen Multiplexeinheiten (VC-4v) zu einer virtuellen Verkettung (VC-4-5v),
- Verpacken von jedem der Transportrahmen (STM-4) einschließlich dessen Kopfbereich (MS-OH, RS-OH, AU-PTR) in Nutzlastbereiche der verketteten neuen Multiplexeinheiten (VC-4v),
- Bilden von zumindest einem neuen Transportrahmen (STM-16) und Verschachteln der verketteten neuen Multiplexeinheiten (VC-4v) in dessen Nutzlastbereich, und
- Übertragen des zumindest einen neuen Transportrahmens (STM-16) über das synchrone Transportnetz (WAN).

3. Verfahren nach Anspruch 1, bei dem das synchrone Transportnetz (WAN) ein SDH-Netz ist, bei dem die Transportrahmen (STM-4) synchrone Transportmodule vom Typ STM-N mit N=1, 4, 16 oder 64 sind, bei dem die Multiplexeinheiten (VC-4) virtuelle Container vom Typ VC-N mit N=11, 12, 2, 3 oder 4 oder nahtlos verkettete virtuelle Container vom Typ VC-4-Nc mit N=4 oder 16 sind und bei dem die neu gebildeten Multiplexeinheiten (VC-4) virtuelle Container vom Typ VC-N mit N=3 oder 4 sind.

4. Verfahren nach Anspruch 1, bei dem in einer ersten der neu gebildeten Multiplexeinheiten (VC-4v) der Kopfbereich (MS-OH, RS-OH, AU-PTR) eines zu übertragenden Transportrahmen (STM-4) sowie Pfadköpfe der im Nutzlastbereich dieses Transportrahmens verschachtelten Multiplexeinheiten (VC-4) zusammengefaßt werden und bei dem in jede der übrigen neu gebildeten Multiplexeinheiten (VC-4v) der Verkettung jeweils eine der Multiplexeinheiten (VC-4) aus dem Nutzlastbereich dieses Transportrahmens (STM-4) ohne deren Pfadkopf eingefügt wird.

5. Verfahren nach Anspruch 1, bei dem ein Transportrahmen vom Typ STM-1 OC-3 oder OC-3-3c über zwei virtuell verkettete virtuelle Container vom Typ VC-4 oder über vier virtuell verkettete virtuelle Container vom Typ VC-3 transportiert wird.

6. Verfahren nach Anspruch 1, bei dem ein Transportrahmen vom Typ STM-4, OC-12 oder OC-3-12c über fünf virtuell verkettete virtuelle Container vom Typ VC-4 oder 13 virtuell verkettete virtuelle Container vom Typ VC-3 transportiert wird.

7. Verfahren nach Anspruch 1, bei dem ein Transportrahmen vom Typ STM-16, OC-48 oder OC-3-48c über siebzehn virtuell verkettete virtuelle Container vom Typ VC-4 oder über 51 virtuell verkettete virtuelle Container vom Typ VC-3 transportiert wird.

8. Verfahren nach Anspruch 1, bei dem ein Transportrahmen vom Typ STM-64, OC-192 oder OC-3-192c über achtundsechzig virtuelle verkettete virtuelle Container vom Typ VC-4 transportiert wird.

9. Multiplexer (ADM) für ein synchrones digitales Transportnetz (WAN) mit
- mindestens einem Zufluß-Eingang (T_IN) zum Empfangen eines ersten rahmenstrukturierten synchronen Multiplexsignals, das aus ersten Transportrahmen (STM-4) mit jeweils einem Nutzlastbereich und einem Kopfbereich (MS-OH, RS-OH, AU-PTR) besteht, in deren Nutzlastbereiche jeweils Multiplexeinheiten (VC-4) gemäß einer Multiplexhierarchie eingefügt sind,
- einer dem Zufluß-Eingang (T_IN) zugeordneten Multiplexeinrichtung zum Bilden neuer Multiplexeinheiten (VC-4v), zum Verketten der neu gebildeten Multiplexeinheiten (VC-4v) zu einer Verkettung (VC-4-5v) und zum Verpacken der empfangenen Transportrahmen (STM-4) einschließlich deren unveränderter Kopfbereiche (MS-OH, RS-OH, AU-PTR) als Nutzlast in die Verkettung der neu gebildeten Multiplexeinheiten (VC-4v) und
- mit mindestens einem Ausgang (OUT_WEST, OUT_ EAST) zum Bilden und Senden eines zweiten rahmenstrukturierten synchronen Multiplexsignals aus zweiten Transportrahmen (STM-16), in deren Nutzlastbereiche jeweils die verketteten, neu gebildeten Multiplexeinheiten (VC-4v) eingefügt sind.

10. Multiplexer nach Anspruch 9 mit einer Schaltmatrix zum wahlfreien Verschalten von Multiplexeinheiten, wobei die Multiplexeinrichtung an einen Matrixeingang und der Ausgang (OUT_WEST, OUT_EAST) an einen Matrixausgang angeschlossen sind.

## Claims

1. Method for transmitting a frame-structured synchronous multiplex signal, consisting of transport frames (STM-4) with a payload area and an overhead (MS-OH, RS-OH, AU-PTR), in the payload area of which in each case multiplex units (VC-4) are nested according to a multiplex hierarchy, via a synchronous digital transport network (WAN), **characterised in that** the transport frames (STM-4) to be transmitted including their unchanged overheads (MS-OH, RS-OH, AU-PTR) are transmitted as a payload in a concatenation (VC-4-5v) of newly formed multiplex units (VC-4v).

2. Method according to claim 1 with the following steps:
- forming a number of new multiplex units (VC-4v) of equal size and concatenating these new multiplex units (VC-4v) into a virtual concatenation (VC-4-5v),
- packaging each of the transport frames (STM-4) including its overhead (MS-OH, RS-OH, AU-PTR) into payload areas of the concatenated new multiplex units (VC-4v),
- forming at least one new transport frame (STM-16) and nesting the concatenated new multiplex units (VC-4v) in its payload area and
- transmitting the at least one new transport frame (STM-16) via the synchronous transport network (WAN).

3. Method according to claim 1, in which the synchronous transport network (WAN) is an SDH network in which the transport frames (STM-4) are synchronous transport modules of type STM-N with N = 1, 4, 16 or 64, in which the multiplex units (VC-4) are virtual containers of type VC-N with N = 11, 12, 2, 3 or 4 or contiguously concatenated virtual containers of type VC-4-Nc with N = 4 or 16 and in which the newly formed multiplex units (VC-4) are virtual containers of type VC-N with N = 3 or 4.

4. Method according to claim 1, in which in a first of the newly formed multiplex units (VC-4v) the overhead (MS-OH, RS-OH, AU-PTR) of a transport frame (STM-4) to be transmitted and also path overheads of the multiplex units (VC-4) nested in the payload area of this transport frame are combined and in which in each case one of the multiplex units (VC-4) from the payload area of this transport frame (STM-4) is added into each of the remaining newly formed multiplex units (VC-4v) of the concatenation without its path overhead.

5. Method according to claim 1, in which a transport frame of type STM-1 OC3 or OC-3-3c is transported via two virtually concatenated virtual containers of type VC-4 or via four virtually concatenated virtual containers of type VC-3.

6. Method according to claim 1, in which a transport frame of type STM-4, OC12 or OC-3-12c is transported via five virtually concatenated virtual containers of type VC-4 or thirteen virtually concatenated virtual containers of type VC-3.

7. Method according to claim 1, in which a transport frame of type STM-16 OC-48 or OC-3-48c is transported via seventeen virtually concatenated virtual containers of type VC-4 or via fifty-one virtually concatenated virtual containers of type VC-3.

8. Method according to claim 1, in which a transport frame of type STM-64, OC-192 or OC-3-192c is transported via sixty-eight virtually concatenated virtual containers of type VC-4.

9. Multiplexer (ADM) for a synchronous digital transport network (WAN) with
- at least one tributary input (T_IN) for receiving a first frame-structured synchronous multiplex signal, consisting of first transport frames (STM-4) with in each case a payload area and an overhead (MS-OH, RS-OH, AU-PTR), in the payload areas of which in each case multiplex units (VC-4) are added according to a multiplex hierarchy,
- a multiplex device allocated to the tributary input (T_IN) for forming new multiplex units (VC-4v) for concatenating the newly formed multiplex units (VC-4v) into a concatenation (VC-4-5v) and for packaging the received transport frames (STM-4) including their unchanged overheads (MS-OH, RS-OH, AU-PTR) as payload into the concatenation of the newly formed multiplex units (VC-4v) and
- with at least one output (OUT_WEST, OUT_EAST) for forming and sending a second frame-structured synchronous multiplex signal consisting of second transport frames (STM-16), in the payload areas of which in each case the concatenated, newly formed multiplex units (VC-4v) are added.

10. Multiplexer according to claim 9 with a switching matrix for optional connecting of multiplex units, wherein the multiplex device is connected to a matrix input and the output (OUT-WEST, OUT-EAST) is connected to a matrix output.

## Revendications

1. Procédé de transmission d'un signal multiplex synchrone structuré en trames qui se compose de trames de transport (STM-4) comprenant un domaine de données utiles et un domaine d'en-tête (MS-OH, RS-OH, AU-PTR), des unités multiplex (VC-4) étant respectivement entrelacées dans ledit domaine de données utiles selon une hiérarchie de multiplexage, par l'intermédiaire d'un réseau de transport numérique synchrone (WAN), **caractérisé en ce que** les trames de transport (STM-4) à transmettre sont transmises, avec leurs domaines d'en-tête (MS-OH, RS-OH, AU-PTR) non modifiés, en tant que données utiles dans une chaîne (VC-4-5v) d'unités multiplex (VC-4v) reformées.

2. Procédé selon la revendication 1, comprenant les étapes suivantes :
- Formation d'un certain nombre de nouvelles unités multiplex (VC-4c) de taille identique et chaînage de ces nouvelles unités multiplex (VC-4c) en une chaîne virtuelle (VC-4-5v),
- Empaquetage de chacune des trames de transport (STM-4), y compris son domaine d'en-tête (MS-OH, RS-OH, AU-PTR) dans les domaines de données utiles des nouvelles unités multiplex chaînées (VC-4v),
- Formation d'au moins une nouvelle trame de transport (STM-16) et entrelacement des nouvelles unités multiplex chaînées (VC-4v) dans le domaine de données utiles de ladite trame, et
- Transmission de ladite au moins une nouvelle trame de transport (STM-16) par l'intermédiaire du réseau de transport synchrone (WAN).

3. Procédé selon la revendication 1, dans lequel le réseau de transport synchrone (WAN) est un réseau SDH dans lequel les trames de transport (STM-4) sont des modules de transport synchrones de type STM-N avec N = 1, 4, 16 ou 64, dans lequel les unités multiplex (VC-4) sont des conteneurs virtuels de type VC-N avec N = 11, 12, 2, 3 ou 4 ou des conteneurs virtuels chaînés de type VC-4-Nc avec N = 4 ou 16, et dans lequel les unités multiplex (VC-4) reformées sont des conteneurs virtuels de type VC-N avec N = 3 ou 4.

4. Procédé selon la revendication 1, dans lequel le domaine d'en-tête (MS-OH, RS-OH, AU-PTR) d'une trame de transport (STM-4) à transmettre ainsi que des surdébits de conduits des unités multiplex (VC-4) entrelacées dans le domaine de données utiles de cette trame de transport sont regroupés dans une première des unités multiplex (VC-4v) reformées, et dans lequel l'une des unités multiplex (VC-A) provenant du domaine de données utiles de cette trame de transport (STM-4) est respectivement incorporée sans son surdébit de conduit dans chacune des unités multiplex reformées (VC-4v) restantes dans la chaîne.

5. Procédé selon la revendication 1, dans lequel une trame de transport de type STM-1, OC-3 ou OC-3-3c est transportée par l'intermédiaire de deux conteneurs virtuels de type VC-4 chaînés de manière virtuelle ou par l'intermédiaire de quatre conteneurs virtuels de type VC-3 chaînés de manière virtuelle.

6. Procédé selon la revendication 1, dans lequel une trame de transport de type STM-4, OC-12 ou OC-3-12c est transportée par l'intermédiaire de cinq conteneurs virtuels de type VC-4 chaînés de manière virtuelle ou par l'intermédiaire de treize conteneurs virtuels de type VC-3 chaînés de manière virtuelle.

7. Procédé selon la revendication 1, dans lequel une trame de transport de type STM-16, OC-48 ou OC-3-48c est transportée par l'intermédiaire de dix-sept conteneurs virtuels de type VC-4 chaînés de manière virtuelle ou par l'intermédiaire de cinquante-et-un conteneurs virtuels de type VC-3 chaînés de manière virtuelle.

8. Procédé selon la revendication 1, dans lequel une trame de transport de type STM-64, OC-192 ou OC-3-192c est transportée par l'intermédiaire de soixante-quatre conteneurs virtuels de type VC-4 chaînés de manière virtuelle.

9. Multiplexeur (ADM) pour un réseau de transport numérique synchrone (WAN) avec
- au moins une entrée affluente (T_IN) destinée à recevoir un signal multiplex synchrone structuré en trames qui se compose d'une première trame de transport (STM-4) comprenant respectivement un domaine de données utiles et un domaine d'en-tête (RS-OH, MS-OH, AU-PTR), des unités multiplex (VC-4) respectives étant entrelacées selon une hiérarchie de multiplexage dans les domaines de données utiles de ladite trame,
- un dispositif de multiplexage affecté à l'entrée affluente (T_IN) pour former de nouvelles unités multiplex (VC-4v), pour chaîner les unités multiplex reformées (VC-4v) en une chaîne (VC-4-5v) et pour empaqueter les trames de transport (STM-4) reçues, y compris leurs domaines d'en-tête (MS-OH, RS-OH, AU-PTR) non modifiés, en tant que données utiles dans la chaîne des unités multiplex reformées (VC-4v), et
- au moins une sortie (OUT_WEST, OUT_EAST) pour former et envoyer un deuxième signal multiplex synchrone structuré en trames composé de deuxièmes trames de transport (STM-16) dans les domaine de données utiles desquelles les unités multiplex reformées chaînées (VC-4v) sont respectivement incorporées.

10. Multiplexeur selon la revendication 9 avec une matrice de commutation permettant de commuter au choix des unités multiplex, dans lequel le dispositif de multiplexage est relié à une entrée de la matrice et la sortie (OUT_WEST, OUT_EAST) est relié à une sortie de la matrice.
